# EUROPÄISCHE PATENTSCHRIFT

(11) **EP 2 216 577 B1**
(45) Veröffentlichungstag und Bekanntmachung des Hinweises auf die Patenterteilung: **29.05.2013**
(21) Anmeldenummer: 10152049.2
(22) Anmeldetag: 29.01.2010
(51) Int. Cl.: F16L 25/03, F16L 58/10

(54) **Rohrförmiges Isolierstück**
Tubular insulator
Pièce d'isolation tubulaire

(30) Priorität: 04.02.2009 DE 102009007388
(43) Veröffentlichungstag der Anmeldung: 11.08.2010
(73) Patentinhaber: Franz Schuck GmbH, 89555 Steinheim (DE)
(72) Erfinder: Mack, Hans, 89537, Giengen (DE)
(74) Vertreter: Lorenz, Markus

(56) Entgegenhaltungen:
- EP-A1- 0 310 773
- DE-A1- 3 639 815
- DE-U1- 7 604 606
- GB-A- 685 573
- PL-A1- 361 606
- US-A- 3 620 555

## Beschreibung

Die Erfindung betrifft ein rohrförmiges Isolierstück zum Einbau in eine Wasserrohrleitung, insbesondere für Trinkwasser, nach der im Oberbegriff von Anspruch 1 näher definierten Art.

Ein gattungsgemäßes Isolierstück ist aus der DE 36 39 815 C2 bekannt. Derartige Isolierstücke werden zur Unterbrechung der Leitfähigkeit von Wasserrohrleitungen eingesetzt, um zu verhindern, dass eine an die Leitung angelegte Spannung bis zu einem Verbraucher gelangen kann. Das Anlegen einer elektrischen Spannung an Wasserrohrleitungen, der sogenannte katodische Korrosionsschutz, stellt ein sehr effektives und wirtschaftliches Verfahren dar, um bei einer Beschädigung des äußeren Korrosionsschutzes von Wasserrohrleitungen Schäden durch Korrosion bei Stahlleitungen zu verhindern.

Um die elektrische Leitfähigkeit der Rohrleitung selbst zu unterbrechen, werden zwischen zwei Rohrabschnitten ein oder mehrere Isolierringe eingesetzt, die die beiden Rohrabschnitte elektrisch voneinander isolieren. Um zu verhindern, dass das die Rohrleitung durchströmende Wasser die an die Wasserrohrleitung angelegte Spannung überträgt, ist die Innenfläche des Rohrstücks mit einer elektrisch isolierenden Beschichtung versehen. Durch Steine oder sonstige, in die Wasserrohrleitung gelangende Gegenstände kann diese üblicherweise aus einem Zweikomponentenanstrich bestehende Beschichtung jedoch beschädigt werden, wodurch die elektrische Isolationswirkung beeinträchtigt werden kann. Des weiteren kann es bei der Verlegung der Rohrleistungen auf der Baustelle durch auf das Rohr einwirkende Biegemomente zu Haarrissen in der Beschichtung kommen, was ebenfalls deren Isolationswirkung nachteilig beeinflusst. Haarrisse können auch durch ein Setzen der Rohrleitung oder durch Druckspritzen des Pumpwerks entstehen. Insbesondere wenn es zu solchen Rissen der Beschichtung kommt, kann möglicherweise Wasser die Beschichtung hinterströmen, was zu einer Korrosion der Rohrleitung führen kann.

Aus der PL 36 16 06 ist ein rohrförmiges Isolierstück zum Einbau in eine Rohrleitung bekannt, welches über eine Funkenstrecke verfügt. Die isolierende Rohrverbindung weist zwei Rohrelemente aus Stahl auf, zwischen denen sich eine Zwischenlage befindet.

Es ist Aufgabe der vorliegenden Erfindung, ein rohrförmiges Isolierstück zum Einbau in eine Wasserrohrleitung zu schaffen, welches einen einfachen und sicheren Schutz gegen Korrosion bietet.

Erfindungsgemäß wird diese Aufgabe durch die in Anspruch 1 genannten Merkmale gelöst.

Durch die erfindungsgemäße Gummierung an der Innenseite wenigstens eines der Rohrabschnitte ist ein sehr zuverlässiger Schutz der Rohrleitung gegen Beschädigungen, wie beispielsweise durch Steine oder dergleichen, gegeben, da diese die Gummierung nicht durchdringen können. Ein weiterer Vorteil der erfindungsgemäßen Lösung besteht in der Elastizität der Gummierung, welche beim Auftreten von Biegemomenten beim Verlegen der Rohrleitung das Entstehen von Haarrissen der Gummierung zuverlässig verhindert.

Ein zusätzlicher Schutz des erfindungsgemäßen Isolierstücks ergibt sich dadurch, dass die Gummierung mit einer Mörtelschicht überzogen ist. Durch eine derartige Mörtelschicht wird das in der Wasserleitung geführte Wasser neutralisiert bzw. in den basischen Bereich gebracht und esergibt sich des weiteren ein zusätzlicher Korrosionsschutz für das Isolierstück.

Die Gummierung kann beispielsweise mit einem oder beiden Rohrabschnitten verklebt sein.

Um eine gute und dauerhafte Verbindung zwischen der Gummierung und dem Rohrabschnitt zu erhalten, kann in einer sehr vorteilhaften Weiterbildung der Erfindung vorgesehen sein, dass die Gummierung mittels Vulkanisieren an dem wenigstens einen Rohrabschnitt angebracht ist. Dadurch wird vorteilhafterweise ein Ablösen der Gummierung von dem Isolierstück zuverlässig verhindert.

Um eine möglichst gute Isolierung und einen guten Schutz des Isolierstücks zu erreichen, kann außerdem vorgesehen sein, dass die Gummierung an beiden Rohrabschnitten angebracht ist.

Wenn in einer weiteren vorteilhaften Weiterbildung der Erfindung vorgesehen ist, dass die Gummierung über die gesamte Länge des Isolierstücks verläuft, so ergibt sich eine maximale Länge der Isolierung bei einer gleichzeitig kleinstmöglichen Länge des Isolierstücks, so dass dieses bei der Montage und der Fertigung sehr einfach zu handhaben ist.

Als hinsichtlich der Länge der Gummierung und damit vorzugsweise des gesamten Isolierstücks hat es sich als besonders vorteilhaft erwiesen, wenn die Länge der Gummierung das 1,5- bis 20-fache des Innendurchmessers der Rohrabschnitte beträgt.

Anspruch 11 betrifft eine Wasserrohrleitung, insbesondere für Trinkwasser, mit einem länglichen Wasserrohr, an dessen beiden Enden jeweils ein erfindungsgemäßes rohrförmiges Isolierstück angebracht ist.

Eine derartige Wasserrohrleitung nutzt sämtliche oben erläuterten Vorteile des erfindungsgemäßen Isolierstücks und ist besonders gut für den Transport von Trinkwasser geeignet.

Weitere vorteilhafte Ausgestaltungen und Weiterbildungen der Erfindung ergeben sich aus den restlichen Unteransprüchen. Nachfolgend ist ein Ausführungsbeispiel der Erfindung anhand der Zeichnung prinzipmäßig dargestellt.

Es zeigt:
- Fig. 1: einen Schnitt durch ein erfindungsgemäßes Iso- lierstück; und
- Fig. 2: eine schematische Darstellung einer Wasser- rohrleitung mit an den Enden derselben ange- brachten Isolierstücken.

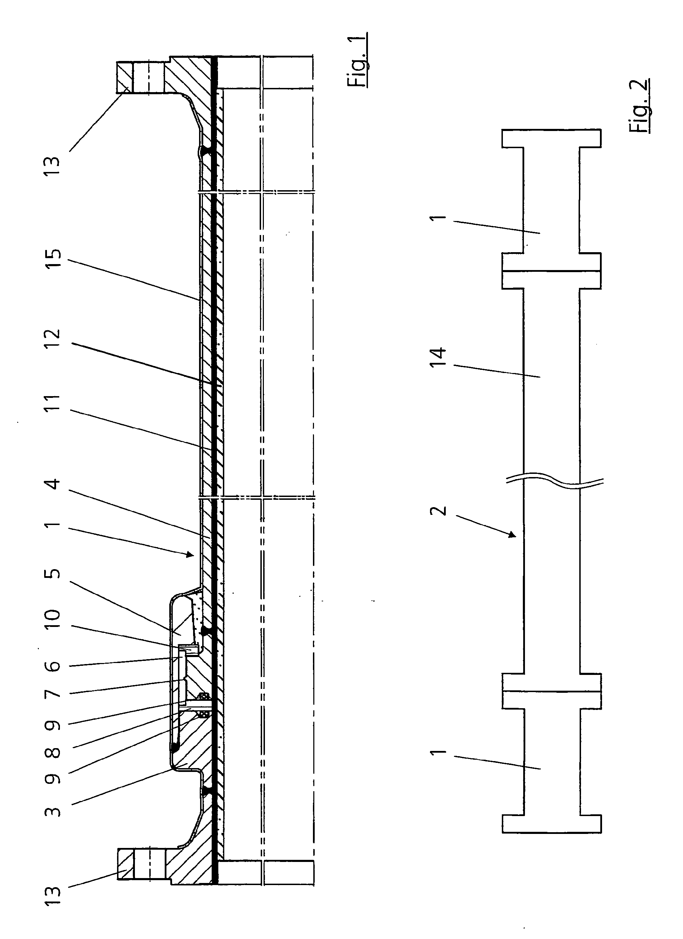

Fig. 1 zeigt ein rohrförmiges Isolierstück 1, welches zum Einbau in eine in Fig. 2 dargestellte Wasserrohrleitung 2 vorgesehen ist. Das Isolierstück 1 weist zwei Rohrabschnitte 3 und 4 auf, die an ihren einander zugewandten Enden mittels einer die Enden umgreifenden Glocke 5 verbunden sind. Um die Verbindung zwischen der Glocke 5 und den Rohrabschnitten 3 und 4 zu verbessern, ist diese im vorliegenden Fall mit dem ersten Rohrabschnitt 3 verschweißt. Wie aus Fig. 1 hervorgeht, kann jeder der Rohrabschnitte 3 und 4 zusätzlich aus einzelnen, miteinander verschweißten Rohrstücken bestehen. Zwischen dem zweiten Rohrabschnitt 4 und der Glocke 5 befindet sich ein Hohlraum 6, in den ein vorzugsweise ringförmiger bzw. umlaufender Vorsprung 7 ragt, der eine sogenannte Ringfunkenstrecke bildet.

Über die Ringfunkenstrecke kann eine in einen der Rohrabschnitte 3 und 4 eingeleitete Überspannung, beispielsweise durch einen Blitz, auf den jeweils anderen Rohrabschnitt 3 bzw. 4 entladen werden, wobei sich bei der Ausführung einer umlaufenden Ringfunkenstrecke die Entladung nicht nur an einer oder mehreren punktförmigen Stellen auftritt, sondern sich über eine Ringfläche verteilt, wodurch die Energiedichte nur so groß ist, dass die beteiligten Bauteile nicht beschädigt werden. Die auftretende Überspannung baut sich dann im Laufe der Wasserrohrleitung 2 ab.

Um die beiden Rohrabschnitte 3 und 4 elektrisch voneinander zu isolieren, ist zwischen denselben ein erster Isolierring 8 angeordnet, der aus einem Material besteht, welches nur sehr schwach elektrisch leitend ist. Auf beiden Seiten des Isolierrings 8 sind jeweilige, im vorliegenden Fall als O-Ringe ausgebildete Dichtungselemente 9 vorgesehen, die für eine Abdichtung in diesem Bereich sorgen. Ein weiterer Isolierring 10 ist zwischen dem zweiten Rohrabschnitt 4 und der Glocke 5 angeordnet, um zu verhindern, dass elektrischer Strom von dem ersten Rohrabschnitt 3 über die Glocke 5 zu dem zweiten Rohrabschnitt 4 oder umgekehrt geleitet werden kann.

Zum Schutz des vorzugsweise im Erdreich verlegten Isolierstücks 1 und der gesamten Wasserrohrleitung 2 ist an die Wasserrohrleitung 2 in nicht dargestellter, jedoch an sich bekannter Weise eine Spannung angelegt, deren Übertragung bis zu einem Nutzer durch das Isolierstück 1 verhindert werden soll. Die an die Wasserrohrleitung 2 angelegte Spannung beträgt vorzugsweise 0,5 bis 20 V. Um auch eine Übertragung der elektrischen Spannung durch das in der Wasserrohrleitung 2 und somit in dem Isolierstück 1 strömende Wasser zu verhindern, ist an der Innenseite wenigstens eines der beiden Rohrabschnitte 3, 4 eine Gummierung 11 angebracht. Die Gummierung 11, die vorzugsweise mittels Vulkanisieren an dem Isolierstück 1 angebracht ist, befindet sich im vorliegenden Fall am Innendurchmesser beider Rohrabschnitte 3 und 4 und verläuft über die gesamte Länge des Isolierstücks 1. Die Gummierung 11 stellt eine sehr gute Isolierung des Innendurchmessers des Isolierstücks 1 dar und verhindert zuverlässig eine Übertragung von elektrischer Spannung über das Wasser auf das Isolierstück 1. Dabei ist die Gummierung 11 so ausgeführt, dass auch größere Steine oder ähnliche, sich möglicherweise innerhalb des Isolierstücks 1 befindliche Gegenstände dieselbe nicht derart schädigen können, dass die Möglichkeit besteht, dass die Isolationswirkung des Isolierstücks 1 verloren geht. Des weiteren ist die Gummierung 11 an ihrer den beiden Rohrabschnitten 3 und 4 abgewandten Innenseite mit einer Mörtelschicht 12, die vorzugsweise aus Zementmörtel besteht, überzogen. Hierfür eignet sich besonders eine Zementmörtelmischung aus Portlandzement (ohne Zusätze), Quarzsand und reinem Wasser. Durch die Aufnahme von Wasser saugt sich die Mörtelschicht 12 während des Einsatzes voll und drückt sich dadurch noch stärker gegen die Innenwandung des Isolierstücks 1. Die Mörtelschicht 12 erhöht dadurch den mechanischen Schutz des Isolierstücks 1.

Die Länge der Gummierung 11 und somit gegebenenfalls des gesamten Isolierstücks 1 ist vom Innendurchmesser des Isolierstücks 1 abhängig und beträgt das 1,5- bis 20-fache des Innendurchmessers des Isolierstücks 1 bzw. der Rohrabschnitte 3 und 4 desselben. Mit zunehmenden Durchmesser wird die Länge der Gummierung 11 und damit des Isolierstücks 1, wenn die Gummierung 11, wie im vorliegenden Fall über die gesamte Länge des gesamten Isolierstücks 1 verläuft, zwar länger, der Quotient aus Baulänge und Innendurchmesser wird jedoch kleiner. So ist bei einem Innendurchmesser von 100 mm eine Länge der Gummierung 11 von 700 bis 1.000 mm sinnvoll bzw. notwendig, bei einem Innendurchmesser von 500 mm lediglich eine Länge von 1.400 bis 2.000 mm und bei einem Durchmesser von 1.000 mm eine Länge von 2.000 bis 3.000 mm. Des weiteren ist die Länge der Gummierung 11 auch von der an der Isoliertrennstelle anliegenden elektrischen Spannung abhängig. Außerdem muss die Leitfähigkeit des Wassers, die teilweise sehr unterschiedlich sein kann, beachtet werden. Die Leitfähigkeit von Trinkwasser beträgt in der Regel zwischen 840 und 1.700 mS/cm.

Die nachfolgenden Werte haben sich in Versuchen als vorteilhaft herausgestellt, wobei "DN" den Durchmesser des Isolierstücks und "Baulänge" die Länge des Isolierstücks bzw. die Länge der Gummierung (ebenfalls in mm) bezeichnet:

| DN | Baulänge mm |
|---|---|
| 100 | 700-1000 |
| 150 | 840-1200 |
| 200 | 910-1300 |
| 250 | 1050-1500 |
| 300 | 1120-1600 |
| 400 | 1260-1800 |
| 500 | 1400-2000 |
| 600 | 1540-2200 |
| 700 | 1680-2400 |
| 800 | 1785-2550 |
| 900 | 1890-2700 |
| 1000 | 2100-3000 |
| 1200 | 2100-3000 |

Im vorliegenden Fall weist das Isolierstück 1 an seinen beiden Enden jeweilige Flansche 13 auf, es ist jedoch auch möglich, einen oder beide Flansche 13 durch Anschweißenden zu ersetzen.

An den Enden der Flansche 13 bzw. den Anschweißenden kann insbesondere an den Stellen bzw. Stirnflächen, die an ein weiterführendes Wasserrohr angrenzen, eine herkömmliche Beschichtung, z. B. ein Zweikomponentenanstrich, vorzugsweise auf Epoxid-Basis, aufgebracht sein.

Aus der schematischen Darstellung gemäß Fig. 2 geht hervor, dass die Wasserrohrleitung 2 neben den beiden Isolierstücken 1 auch ein sich zwischen den Isolierstücken 1 befindliches Wasserrohr 14 aufweist. Mit anderen Worten, an den beiden Enden des Wasserrohrs 14 ist jeweils eines der Isolierstücke 1 angebracht. Die Länge des zwischen den beiden Isolierstücken 1 eingesetzten Wasserrohrs 14, d. h. der Abstand zwischen den beiden Isolierstücken 1, kann beispielsweise 10 km betragen.

Erfindungsgemäß kann vorgesehen sein, dass ein Wasserrohr 14 in regelmäßigen Abständen, z. B. alle 2 bis 20 km, vorzugsweise 8 bis 12 km, ein Isolierstück aufweist. Dadurch werden sinnvoll zu überwachende Teilstücke geschaffen.

Vorzugsweise ist zumindest an einem Ende des Wasserrohrs, besonders bevorzugt an beiden Enden, ein Isolierstück vorgesehen.

Der Einsatz eines Isolierstücks an einem Ende des Wasserohrs 14 kann insbesondere dann genügen, wenn am anderen Ende ein Wechsel von einer Stahl- oder Edelstahlleitung auf eine PE-Leitung (Polyethylen-Leitung) erfolgt.

Wie sich aus Fig. 1 ferner ergibt, ist an der Außenseite des Isolierstücks 1 ein Korrosionsschutz 15 vorgesehen bzw. aufgebracht. Der Korrosionsschutz 15 kann beispielsweise als Polyurethan-Beschichtung (PUR-Beschichtung) oder als Schrumpfschlauch ausgebildet sein. Der Einsatz eines Schrumpfschlauchs eignet sich insbesondere für Rohrdurchmesser bis 400 mm. Der Einsatz einer Polyurethan-Beschichtung - wie im Ausführungsbeispiel vorgesehen - eignet sich insbesondere für Rohrdurchmesser bzw. Durchmesser des Isolierstücks von größer 400 mm. Die Polyurethan-Beschichtung kann als Protegol-PUR-Beschichtung ausgebildet sein, einem lösungsmittelfreien, heiß verarbeitbaren Zweikomponentenbeschichtungsmaterial mit kurzer Reaktionszeit. Der Korrosionsschutz 15 kann grundsätzlich auch auf andere Art und Weise realisiert werden. Bei einer oberirdischen Verlegung des Isolierstücks kann der Korrosionsschutz 15 auch vollständig entfallen.

Im Falle einer Beschädigung des Korrosionsschutzes 15 schützt eine vorstehend bereits beschriebene, an der Wasserrohrleitung 2 angelegte Spannung von beispielsweise 0,5 bis 20 Volt, vorzugsweise 2 bis 2,5 Volt, die Wasserrohrleitung 2 bzw. die Isolierstücke 1 und das Wasserrohr 14 vor einer Korrosion. Die Spannung kann dabei erhöht werden, wenn der äußere Korrosionsschutz 15 an dem Isolierstück 1, der in selber Weise auch an dem Wasserrohr 14 ausgebildet sein kann, beschädigt ist. Von Vorteil ist dabei auch, dass in bekannter Weise durch das Anlegen der Spannung erkannt werden kann, ob der äußere Korrosionsschutz 15 beschädigt ist.

Im Ausführungsbeispiel ist vorgesehen, dass die gesamte Wasserrohrleitung 2, d. h. auch das Wasserrohr 14, mit einem äußeren Korrosionsschutz versehen ist, insbesondere in den Bereichen, in denen die Wasserrohrleitung 2 nicht oberirdisch verlegt ist.

Grundsätzlich muss der Korrosionsschutz 15 das Isolierstück 1 nicht vollständig umfassen, beispielsweise können die Flansche 13 keinen äußeren Korrosionsschutz 15 aufweisen. Es ist jedoch vorteilhaft, wenn der äußere Korrosionsschutz 15 das Isolierstück 1 möglichst vollständig umschließt, damit eine Korrosion vermieden wird.

Als Material für die Gummierung 11 eignet sich beispielsweise ein elastisches Polymer oder ein Material auf Polymerbasis, z. B. Kautschuk und entsprechende Mischungen.

Die Stärke der Gummierung kann 1 mm bis 5 mm, vorzugsweise 3 mm, betragen.

Grundsätzlich kann das Isolierstück auch aus mehreren Rohren zusammengesetzt sein, insbesondere um die notwendige Länge der Gummierung im Verhältnis zum Durchmesser des Bauteils zu erreichen. Dies ist jedoch herstellungstechnisch teurer als die vorstehend beschriebene Ausführungsform.

Der Einbau des Isolierstücks 1 und somit der gesamten Wasserrohrleitung 2 kann unterirdisch, oberirdisch oder im Schachteinbau erfolgen.

Grundsätzlich wird die erfindungsgemäße Aufgabe auch gelöst, wenn das Isolierstück keine Ringfunkenstrecke aufweist. Auch der Hohlraum 6 und die Glocke 5 können entfallen. Eine Kombination der Ringfunkenstrecke, des Hohlraums 6 und der Glocke 5 mit der erfindungsgemäßen Gummierung ist jedoch besonders geeignet.

## Patentansprüche

1. Rohrförmiges Isolierstück zum Einbau in eine Wasserrohrleitung, insbesondere für Trinkwasser, mit zwei Rohrabschnitten (3,4), die mittels wenigstens eines Isolierringes (8,10) gegenüber einander isoliert sind,
**dadurch gekennzeichnet, dass**
an der Innenseite wenigstens eines der beiden Rohrabschnitte (3,4) eine Gummierung (11) angebracht und die Gummierung (11) mit einer Mörtelschicht (12) überzogen ist.

2. Isolierstück nach Anspruch 1,
**dadurch gekennzeichnet, dass**
die Außenseite des Isolierstücks (1) mit einem Korrosionsschutz (15) versehen ist.

3. Isolierstück nach Anspruch 2,
**dadurch gekennzeichnet, dass**
der Korrosionsschutz (15) als Polyurethan-Beschichtung oder als Schrumpfschlauch ausgebildet ist.

4. Isolierstück nach Anspruch 1, 2 oder 3,
**dadurch gekennzeichnet, dass**
die Gummierung (11) mittels Vulkanisieren an dem wenigstens einen Rohrabschnitt (3,4) angebracht ist.

5. Isolierstück nach Anspruch 1 bis 4,
**dadurch gekennzeichnet, dass**
die Gummierung (11) an beiden Rohrabschnitten (3,4) angebracht ist.

6. Isolierstück nach Anspruch 5,
**dadurch gekennzeichnet, dass**
die Gummierung (11) über die gesamte Länge des Isolierstücks (1) verläuft.

7. Isolierstück nach einem der Ansprüche 1 bis 6,
**dadurch gekennzeichnet, dass**
die Länge der Gummierung (11) das 1,5- bis 20-fache des Innendurchmessers der Rohrabschnitte (3,4) beträgt.

8. Isolierstück nach einem der Ansprüche 1 bis 7,
**dadurch gekennzeichnet, dass**
die beiden Enden der Rohrabschnitte (3,4) von einer Glocke (5) umgriffen sind, wobei zwischen den Rohrabschnitten (3,4) und der Glocke (5) ein Hohlraum (6) gebildet ist, und wobei ein eine Ringfunkenstrecke ausbildender Vorsprung (7) in den Hohlraum (6) ragt.

9. Isolierstück nach einem der Ansprüche 1 bis 8,
**dadurch gekennzeichnet, dass**
die Rohrabschnitte (3,4) aus Stahl oder Edelstahl bestehen.

10. Isolierstück nach einem der Ansprüche 1 bis 9,
**dadurch gekennzeichnet, dass**
zwei axial voneinander beabstandete Isolierringe (8,10) vorgesehen sind.

11. Wasserrohrleitung, insbesondere für Trinkwasser, mit einem länglichen Wasserrohr, an dessen beiden Enden jeweils ein rohrförmiges Isolierstück (1) nach einem der Ansprüche 1 bis 10 angebracht ist.

12. Wasserohrleitung nach Anspruch 11,
**dadurch gekennzeichnet, dass**
an dem Isolierstück (1) und/oder dem Wasserrohr (14) eine Spannung angelegt ist.

13. Wasserrohrleitung nach Anspruch 12,
**dadurch gekennzeichnet, dass**
die Spannung 0,5 bis 20 V beträgt.

## Claims

1. A tubular insulating piece for installation in a water pipeline, in particular for drinking water, having two pipe sections (3, 4) which are insulated with respect to one another by means of at least one insulating ring (8, 10), **characterised in that** a rubber lining (11) is fixed to the inside of at least one of the two pipe sections (3, 4) and the rubber lining (11) is covered by a mortar layer (12).

2. An insulating piece according to Claim 1,
**characterised in that** the outside of the insulating piece (1) is provided with corrosion protection (15).

3. An insulating piece according to Claim 2,
**characterised in that** the corrosion protection (15) is in the form of a polyurethane coating or a heat-shrinkable sleeve.

4. An insulating piece according to Claim 1, 2 or 3,
**characterised in that** the rubber lining (11) is fixed to the at least one pipe section (3, 4) by vulcanisation.

5. An insulating piece according to Claims 1 to 4,
**characterised in that** the rubber lining (11) is fixed to both pipe sections (3, 4).

6. An insulating piece according to Claim 5,
**characterised in that** the rubber lining (11) extends over the entire length of the insulating piece (1).

7. An insulating piece according to one of Claims 1 to 6,
**characterised in that** the length of the rubber lining (11) is 1.5 to 20 times the internal diameter of the pipe sections (3, 4).

8. An insulating piece according to one of Claims 1 to 7,
**characterised in that** the two ends of the pipe sections (3, 4) are surrounded by a jacket (5), wherein a cavity (6) is formed between the pipe sections (3, 4) and the jacket (5) and wherein a projection (7) forming an annular spark gap projects into the cavity (6).

9. An insulating piece according to one of Claims 1 to 8,
**characterised in that** the pipe sections (3, 4) are made of steel or stainless steel.

10. An insulating piece according to one of Claims 1 to 9,
**characterised in that** two mutually axially spaced insulating rings (8, 10) are provided.

11. A water pipeline, in particular for drinking water, having an elongated water pipe on the two ends of which a respective tubular insulating piece (1) according to one of Claims 1 to 10 is mounted.

12. A water pipeline according to Claim 11,
**characterised in that** a voltage is applied to the insulating piece (1) and/or the water pipe (14).

13. A water pipeline according to Claim 12,
**characterised in that** the voltage is 0.5 to 20 V.

## Revendications

1. Pièce d'isolation tubulaire destinée à être insérée dans une conduite d'eau, notamment une conduite d'eau potable, comportant deux sections de conduites (3, 4) qui sont respectivement isolées l'une par rapport à l'autre au moyen d'au moins une bague d'isolation (8, 10),
**caractérisée en ce que**,
la face intérieure de l'une des deux sections de conduites (3, 4) est pourvue d'un revêtement en caoutchouc (11), ce revêtement en caoutchouc étant recouverte d'une couche de mortier (12).

2. Pièce d'isolation selon la revendication 1,
**caractérisée en ce que**,
le côté extérieur de la pièce d'isolation (1) est pourvu d'une protection anticorrosion (15).

3. Pièce d'isolation selon la revendication 2,
**caractérisée en ce que**,
la protection anticorrosion (15) est constituée d'un revêtement en polyuréthane ou d'un manchon en forme de bas.

4. Pièce d'isolation selon la revendication 1, 2 ou 3,
**caractérisée en ce que**,
le revêtement en caoutchouc (11) est réalisé par vulcanisation effectuée sur ladite au moins une section de conduites (3, 4).

5. Pièce d'isolation selon la revendication 1à 4,
**caractérisée en ce que,**
le revêtement en caoutchouc (11) est effectué sur les deux sections de conduites (3, 4).

6. Pièce d'isolation selon la revendication 5,
**caractérisée en ce que,**
le **revêtement** en **caoutchouc** (11) s'étend sur toute la longueur de la pièce d'isolation (1).

7. Pièce d'isolation selon l'une des revendications 1 à 6,
**caractérisée en ce que,**
la longueur du revêtement en caoutchouc (11) représente 1, 5 à 20 fois le diamètre intérieur des sections de conduites (3, 4).

8. Pièce d'isolation selon l'une des revendications 1à 7,
**caractérisée en ce que,**
les deux sections de conduites (3, 4) sont entourées d'une cloche (5), dans laquelle un espace creux (6) est formé entre la cloche (5) et les sections de conduites (3, 4) et dans laquelle une protubérance (7) constituant un chemin annulaire de décharge électrique pénètre dans l'espace creux (6).

9. Pièce d'isolation selon l'une des revendications 1à 8,
**caractérisée en ce que,**
les sections de conduites (3, 4) sont en acier ou en acier inoxydable.

10. Pièce d'isolation selon l'une des revendications 1à 9,
**caractérisée en ce que,**
deux bagues d'isolation (8, 10) distantes axialement l'une de l'autre sont prévues.

11. Conduite d'eau, en particulier pour de l'eau potable comportant un tube allongé de circulation d'eau, dont chaque extrémité est pourvue d'une pièce d'isolation (1) selon l'une des revendications 1 à 10.

12. Conduite d'eau selon la revendication 11,
**caractérisée en ce,**
**qu'**une tension est appliquée sur la pièce d'isolation (1) et/ou sur tube de circulation d'eau (14).

13. Conduite d'eau selon la revendication 12,
**caractérisée en ce que,**
la tension est comprise entre 0,5 et 20 V.
